# EUROPEAN PATENT APPLICATION

(11) **EP 2 827 208 A2**
(43) Date of publication of application: **21.01.2015**
(21) Application number: 14002020.7
(22) Date of filing: 12.06.2014
(51) Int. Cl.: G05B 23/02

(54) **Predictive energy consumption control system and method**

(30) Priority: 12.06.2013 EP 13003002
(71) Applicant: ABB Technology AG, 8050 Zürich (CH)
(72) Inventor: John, Dirk, 76199 Karlsruhe (DE); Schulz, Dirk, 67149 Meckenheim (DE); Nenninger, Philipp, 76135 Karlsruhe (DE)
(74) Representative: Kock, Ina

(57) **Abstract**

Predictive energy consumption control system and method for an improved energy management of autonomous devices in process automation systems, comprising at least one data processing unit equipped to generate and/or apply at least one use-case oriented energy consumption model for autonomous devices, in particular autonomous transmitters AT, wherein at least one of energy during sleep-mode, energy during any activity, energy to transmit data, energy to receive data and energy to measure a process value, in particular a pressure value, is predictively determined and processed and/or coded into the devices firmware providing an improved energy management and control functionality for each device.

## Description

The invention relates to a predictive energy consumption control system and a method for a predictive determination and control of the energy consumption of an autonomous device, in particular a field device of a process or plant automation system.

According to the invention during the development of autonomous devices like ABB's autonomous transmitters (AT) AT, it is possible to create a precise model for the energy consumption of such devices. As these models are relatively large and complex, they have to be simplified to use-case oriented models, which may be used to predictively determine how much energy a device consumes when measuring a single process value, transmitting one byte of data, sleeping in a power-saving mode and the like. Since it is known in the DCS (Distributed Control System) how many values are read from a device and how often, the overall (future) energy consumption can be predicted precisely and through straight-forward calculation.

One challenge for autonomous devices is the provisioning with energy. Batteries must be exchanged after a certain time, harvesters exhibit an uncertainty regarding the available energy. The energy consumption of a device largely depends on how it is actually used in a given plant. It is possible to measure the momentary energy consumption of a device and the battery voltage level to determine the need for maintenance.

For the newly developed autonomous field devices and harvesters, detailed knowledge is available on their energetic behavior (device type information). Within the DCS, detailed knowledge is available on the specific use of each individual field device (device instance information).

There is a clear need for an improved energy management in wireless process automation networks, and the required information basically is available. Still, there is no tool support for the planning, engineering, monitoring, maintenance and control of the energy aspect of a wireless mesh network using precise predictions and control functions.

The existing empiric methods, namely the measuring of energy consumption and battery voltage, can only be used in an operational plant to estimate battery-life time. Also, this either requires the integrated values of all consumed energy or only imminent battery failures can be detected; the better the battery (and the more stable the voltage), the later end of life can be detected.

The existing analytical device and/or harvester energy models are rather complex and accessing usage information for a single device is not a trivial task and easy to achieve. Predictions about the energetic behavior of single devices can only be made through time-consuming simulation; for entire device networks, these simulations also include a large statistical component about the use of a single device and are thus not perfectly precise.

Information about the cyclic use of a device is available even within the device, for example in WirelessHART in the form of the WirelessHART burst configuration; information regarding the acyclic use, for example for today's asset monitoring, is available only in the DCS (Distributed Control System) and not necessarily accessible to a device tool through open interfaces.

Common implementations of network managers only disclose and provide limited capabilities to influence the optimization target, for example the energy consumption and/or operation time. The routing load is equally distributed among all nodes independent of their energy source or location. In a network in which all devices are battery powered this may lead to an equal or similar battery lifetime of all devices, which according to the specific functionalities of individual devices may not be sufficient or preferable.

Therefore, the object of the invention is to provide system and method means for an improved and more efficient and flexible energy management of autonomous devices in process automation systems to improve onset or operation time and operational readiness of individual autonomous devices.

Said object is solved and achieved by the predictive energy consumption control system according to the invention, wherein by means of at least one data processing unit or device a use-case oriented energy consumption model for autonomous devices, in particular autonomous transmitters (AT), is generated and applied, wherein at least one of energy during sleep-mode, energy during any activity , in particular in units of µW/ms, energy to transmit data, for example to transmit a single byte, energy to receive data, for example to receive a single byte , in particular in units of µW/Byte, energy to measure a process value, for example a pressure value, in particular in units of µW, is predictively determined and processed and/or coded into the devices firmware to provide an improved energy management and control functionality, in particular concerning the energy consumption and energy management of each individual device.

Furthermore, a corresponding predictive energy consumption control method for an improved energy management of autonomous devices in process automation system is proposed, generating and/or applying at least one use-case oriented energy consumption model for autonomous devices, in particular autonomous transmitters AT, wherein at least one of energy during sleep-mode, energy during any activity, energy to transmit data, for example a single byte, energy to receive data, for example a single byte, and energy to measure a process value, in particular a pressure value, is predictively determined and processed and/or coded into the devices firmware providing an improved energy management and control functionality for each device.

Accordingly, in one embodiment the predictive energy consumption control method is implemented in the device itself, wherein the exact energy consumption for the current usage or application of an autonomous device instance is determined and/or calculated by the device itself.

In a further embodiment the predictive energy consumption control method is executed and/or performed by means of a control system, in particular the predictive energy consumption control system, wherein the exact energy consumption for the current usage or application of an autonomous device instance is determined and/or calculated.

In another embodiment both approaches mentioned above may be combined.

In one embodiment the predictive energy consumption control system provides a collecting unit, which gathers and collects for each existing or planned device in each provided network at least one of information and data relating to a device type corresponding description, a burst configuration for each device instance (cyclic data), an execution strategy for each asset monitor instance (acyclic data) command sequences from the asset monitors of each device type, the length of each of the gathered commands, graphs implementing the end-to-end communication between devices and gateways, planned/expected transmit signal strength, network management overhead (e.g. advertising tasks) and environmental conditions (e.g. temperature) which may be given as a function of time.

In a further refinement a profiling unit is provided generating and/or creating and/or calculating usage data structures or usage profiles according to and/or by processing the gathered and/or collected data and information mentioned above for each device in each network. Said usage data structure provides and comprises at least one of the amount of bytes received by each device per given time unit, the amount of bytes sent by each device per given time unit and the amount of device functions (e.g. measurement) executed per given time function.

Furthermore, according to the invention using the energy profile given for each of the used device types and the gathered instance information, the required amount of energy per given time unit may be calculated for each device instance.

In a further refinement for each existing or planned available energy source the source type and corresponding description and/or the environmental conditions (e.g. temperature), which in particular may be given as a function of time,

Furthermore, the respective energy source for each device instance and/or device in a network is identified, in particular those where such a mapping exists.

In a further embodiment the desired communication latency of the burst data connection and/or desired reliability of the burst data connection and/or desired availability of the burst data connection is being specified for each device instance and/or the desired maintenance effort and schedule is being specified for each energy source instance.

Furthermore, in a process automation system a DCS may be provided which comprises an FDI-based Device Management System (DMS), wherein according to said system all command sequences are read from the imported EDD (Electronic Device Description) files, the burst configuration is read from the device instance and/or through direct access and/or through the FDI OPC UA server and/or from the physical device and/or using FDI nested communication.

In another refinement the asset monitoring strategy is read from an FDI server executing specific EDD-implemented monitoring functions, wherein the network schedule is read from the network manager using standardized HART commands and/or using the FDI OPC UA server (where the gateway device exposes such data) and/or using a proprietary interface.

Furthermore, in another embodiment the network schedule is read from the set of all devices in a network using standardized HART commands and/or using the FDI OPC UA server (where the gateway device exposes such data) by means of a proprietary interface.

The described system as well as the corresponding method according to the invention allow and provide a prediction of an energy behavior of any given device depending on its own design, its use in the actual automation process, the process environment, like for example environment temperature, amount of vibration, duration of daytime, etc.. Said prediction may be used to improve and/or applied to improve the established life-cycle activities of offline automation engineering, including device and communication engineering, commissioning, plant operation including device/fieldbus diagnostics, monitoring, and fault prediction.

In the same manner, the amount of energy available from energy sources, like batteries, harvesters, 4-20mA loops, etc., is determined. Each energy source is assigned a profile connecting input parameters to an expected energy output. Such input parameters are environmental conditions such as environment temperature, amount of vibration, duration of daytime, etc., the resulting physical quantities, in particular temperature difference, available vibration or light, etc..

During offline engineering constraints on available energy are estimated along with the required energy from the devices. This allows already checking if an automation design is feasible from an energy perspective or not.

Furthermore, the energy consumption may be constrained strategically, for example to enforce a certain battery life-time and/or to enforce a certain device operation time or generally reduce the strain on an energy source.

Constraints on energy use are also made available to communication engineering in order to place gateways or additional wireless repeaters in opportune places to relieve process-relevant devices from energy-intensive communication tasks. Constraints on energy use are also made available to communication engineering as input to the calculation or determination of communication schedules on top of the selected devices, repeaters, and gateways in their locations.

Overall, the method allows with a relatively low effort to engineer a communication infrastructure that does not only fulfill the application needs, like for example bandwidth, cycle time, etc., but also exhibits a controlled and known energy use and thus ensures and proves system reliability from an energy perspective, which is not state of the art and/or not known from common systems and methods.

Thus, during commissioning, the estimated behavior of the devices and wireless systems may already be compared to the actually measured values on available and consumed energy. This may be used to confirm the engineering or to point at engineering flaws as early as possible. Upon the detection of such an engineering flaw, the related assumptions are updated and the concerned parts are reengineered. Incorrect assumptions may be on the actual usage of a device or the typical energy consumption of a whole class of devices; another source of flaws comes from wrongly estimated harvesting potentials in a process. Re-engineering may mean to add repeaters or change the energy source of a device.

During plant operation, the predictive energy consumption control system and/or method may be used to create reference values for ongoing device and network monitoring. These reference values are compared to what is actually measured, and deviations above a determined limited may trigger a root cause analysis and subsequently service or maintenance and/or management and/or control activities.

To further increase the precision of the estimated energy consumption, the expected environment temperature is taken into account, as the temperature typically impacts and /or influences the energy behavior and/or energy consumption of any kind of electronics.

Furthermore, various environment or environmental conditions like for example the temperature and/or temperature difference and/or flow and/or vibrations and the like may be taken into account and/or are processed to determine the energy behavior of the respective device and/or any kind of electronics.

In another embodiment the estimated energy or energy consumption for one or more devices may be determined and/or calculated according to or based on temperature difference(s) extracted from a process design data structure, in particular extracted from the Piping and Instrumentation Diagram (P&ID), wherein a Piping and Instrumentation Diagram - P&ID comprises a schematic and/or graphical presentation of functional relationship of piping, instrumentation and system equipment components.

In a further embodiment during commissioning, a device instance of autonomous devices like autonomous transmitters receives its burst configuration, in particular for the cyclic transmission of process variables, and/or a burst configuration, in particular for the cyclic transmission of process variables, is transmitted to and/or installed on a device instance of autonomous devices like autonomous transmitters.

In a further refinement when first joining a wireless network, in particular a wirelessHART network, the Network Manager also downloads the transmission schedule, that is also describing for which neighbours the autonomous devices and/or transmitters must forward data to the gateway of the network.

In a further embodiment the device has an internal copy of its own energy consumption model and when first joining a wireless network, in particular a wirelessHART network, the respective network manager downloads the transmission schedule and burst configurations, that is in which intervals the device is expected to measure process data or perform actuation and also describing for which neighbours the autonomous devices and/or transmitters must forward data to the gateway of the network enabling the device to predict its own future energy consumption by combining the energy model and the actual usage according to the schedule and making the results of this predication available for retrieval by the automation system.

According to a further embodiment an energy consumption unit as an autonomous device instance is provided which now determines and/or calculates the exact energy consumption for its current usage or application.

In another embodiment of the invention the determinations and/or calculations are performed inside the system, in particular by means of the at least one data processing unit or device, or by means of an FDT DTM (Field Device Tool Device Type Manager).

In a further embodiment the calculations are performed inside or by means of an FDI (Field Device Integration) Device Package. In this case, the FDI (Field Device Integration) server architecture not only allows access to the burst configuration (cyclic data) but also to the parameters of the device asset monitor (acyclic data). It can thus perform an even more precise calculation and/or determination.

In a further refinement the engineering of maintenance-oriented routing is applied and provided, wherein in addition to load-balancing the energy consumption of devices in the network in favor of autonomous or battery powered devices parameters for favored routing devices based on the respective location are determined and/or calculated, so that accordingly a set of devices, preferably the ones easy to reach and to maintain, are selected or selectable to take over the majority of routing activities for other devices that are hard and/or difficult and/or complex to maintain.

According to the proposed system and method a precise planning and/or control of energy consumption and maintenance aspects already during initial wireless engineering and/or commissioning may be offered and/or applied and/or executed and/or carried out to ensure network and data quality and operation.

In contrast to the present invention existing concepts and solutions seem to focus on network optimization at runtime, when the meshes have already been planned, engineered, commissioned, and are supposed to be ready for operation.

The system and corresponding method according to the invention mitigates and/or minimizes and/or discovers related risks of wrong or erroneous planning at the earliest possible stage.

It also aims to project confidence to the customer and/or applicant and/or operator since energy consumption of autonomous devices is, in addition to "missing" wires and/or long-term operation, one of the main challenges of wireless communication.

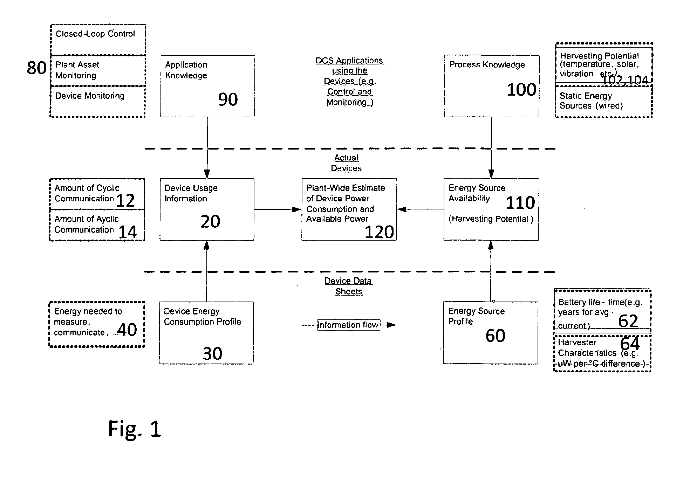

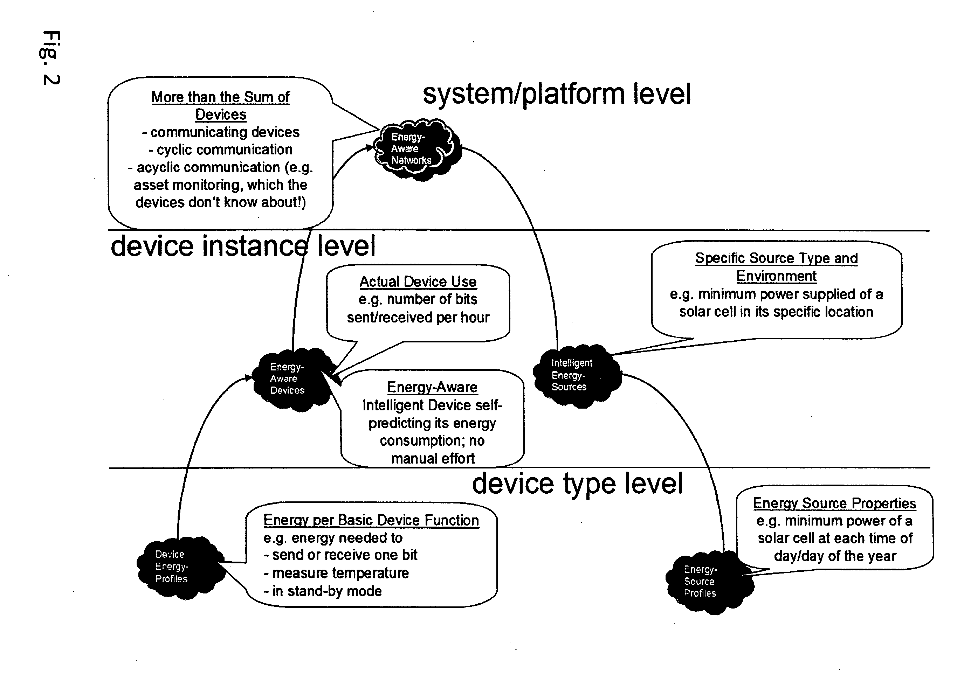

The further disclosure and explanation of the invention as well as advantageous embodiments and further developments are presented according to at least two illustrative embodiments, disclosed in Fig. 1 and Fig. 2.

In Fig. 1 an exemplary embodiment of a plant automation system comprising a wireless network and several network and/or field devices with an energy consumption control system and method according to the invention is disclosed, wherein a precisely prediction of the energetic behavior of a device in a given process plant or process plant environment and/or harvesting is performed and/or operational control actions are provided and/or proposed, and wherein a set of use-case oriented, device-specific energy models and/or energy data structures are determined and/or provided, including information on the effect of environmental conditions, a fieldbus-specific (but device-generic) communication model is determined and/or provided, including information about network management overhead and/or information on the usage of the existing or planned devices for any of the use-cases given in the energy data structure or model.

The respective energy consumption control system provides a collecting device, which gathers and collects for each existing or planned device in each provided network at least one of information and data relating to a device type corresponding description, a burst configuration for each device instance (cyclic data), an execution strategy for each asset monitor instance (acyclic data) command sequences from the asset monitors of each device type, the length of each of the gathered commands, graphs implementing the end-to-end communication between devices and gateways, planned/expected transmit signal strength, network management overhead (e.g. advertising tasks) and environmental conditions (e.g. temperature) which may be given as a function of time.

Furthermore a profiling unit is provided generating and/or creating and/or calculating usage data structures or usage profiles 20 according to and/or by processing the gathered and/or collected data and information, in particular related to the amount of cyclic communication 12 and/or the amount of acyclic communication 14 mentioned above for each device in each network. Said usage data structure provides and comprises at least one of the amount of bytes received by each device per given time unit, the amount of bytes sent by each device per given time unit and the amount of device functions (e.g. measurement) executed per given time function.

Furthermore, according to the invention a device energy consumption profile 30 is created using the energy profile given for each of the used device types, comprising device specific information and/or data 40, which relates to the amount of energy needed to measure, to communicate etc., and/or the gathered instance information, wherein the required amount of energy per given time unit may be calculated for each device instance.

Accordingly an energy source profile and/ or data structure is created and/or defined for each device in the network based on the device energy consumption profile 30 and by means of for example battery lifetime information 62 and harvester characteristics 64.

For each existing or planned available energy source the source type and corresponding description and/or the environmental conditions (e.g. temperature), which in particular may be given as a function of time are determined.

Accordingly the energy source for each device instance may be identified by mapping the available energy source to the usable and/or suitable energy source profile. Furthermore, the desired communication latency of the burst data connection and/or desired reliability of the burst data connection and/or desired availability of the burst data connection is being specified for each device instance and/or the desired maintenance effort and schedule is being specified for each energy source instance.

In a process automation system a DCS may be provided which comprises an FDI-based Device Management System (DMS) 80, wherein according to said system all command sequences are read from the imported EDD (Electronic Device Description) files, the burst configuration is read from the device instance and/or through direct access and/or through the FDI OPC UA server and/or from the physical device and/or using FDI nested communication.

Moreover, the asset monitoring strategy may be read from an FDI server executing specific EDD-implemented monitoring functions, wherein the network schedule is read from the network manager using standardized HART commands and/or using the FDI OPC UA server (where the gateway device exposes such data) and/or using a proprietary interface.

The network schedule may be read from the set of all devices in a network using standardized HART commands and/or using the FDI OPC UA server (where the gateway device exposes such data) by means of a proprietary interface.

The described system as well as the corresponding method according to the invention allow and provide a prediction of an energy behavior 120 of any given device depending on its own design 90, its use in the actual automation process 20, the process environment 100, like for example environment temperature 102, amount of vibration 104, duration of daytime, etc.. Said prediction may be used to improve and/or applied to improve the established life-cycle activities of offline automation engineering, including device and communication engineering, commissioning, plant operation including device/fieldbus diagnostics, monitoring, and fault prediction. Moreover, the amount of energy available from energy sources, like batteries, harvesters, 4-20mA loops, etc., is determined. Each energy source is assigned a profile 60 connecting input parameters to an expected energy output. Such input parameters are environmental conditions such as environment temperature, amount of vibration, duration of daytime, etc., the resulting physical quantities, in particular temperature difference, available vibration or light, etc..

During offline engineering constraints on available energy are estimated along with the required energy from the devices. This allows already checking if an automation design is feasible from an energy perspective.

A plant automation system comprising a predictive energy consumption control system and method according to the invention is presented and/or disclosed. The plant automation system comprises at least one wireless communication network and/or several field and/or network devices.

According to the described and claimed method the energetic behavior of a device in a given process plant may be determined and predicted in the following manner and with the following applications/benefit.

A set of use-case oriented, device-specific energy data structures or models including information on the effect of environmental conditions, a fieldbus-specific (but device-generic) communication model or data structure including information about network management overhead, information on the usage of the existing or planned devices for any of the use-cases given in the energy model.

Using and/or processing these data structure and/or models and information about the instances, the energy consumption of each specific device instance is analytically calculated and/or determined.

Furthermore, a set of energy source profiles or data structures is provided, including information on the effect of environmental conditions, information on the placement and environmental conditions of each energy source instance.

Using the energy source models and instance information, the expected available energy can be calculated as a function of time and process conditions. Required and available energy values are together used inside network planning and monitoring components of the DCS to predict maintenance schedules, provide input to the Network Manager in the form of energy limits (optionally adjusted by maintenance requirements), and monitor the energy condition of the network during operation.

To determine the harvesting potential during offline engineering, the process engineering data or construction plans are analyzed.

Particularly for temperature harvesting, min/max ranges of IO points are considered, temperature set-points are considered, estimated environment temperatures are taken into account. This allows an estimate of the expected temperature difference available for harvesting.

Particularly for vibration, the type and size of rotating equipment and speed or torque set-points are considered.

Particularly for solar harvesting, time of year and time of day are considered along with the location of the harvester (indoor, outdoor).

For all types of harvesting, the environment temperature is considered as it typically impacts the energy behavior of any kind of electronics.

Any such prediction of harvester behavior allows a more exact selection of the right type of energy source for the given usage of its device and the process environment in which it will be used. In some cases, dedicated wired power supply (e.g. for repeaters) may be warranted. Temperature harvesters have different efficiencies for various temperature differences and absolute environmental temperatures. Vibration harvesters operate very badly outside of a specific resonance frequency. It is not a solution to compensate this by "just buying the most expensive harvester" and/or just buying the best performing or equipped harvester.

To verify and monitor harvesting potential at runtime (i.e. before simply measuring current energy output of a harvester), the actual primary (or secondary, etc.) values of the field devices are used.

Particularly for temperature harvesting, the primary value may be compared to the environment value, which typically can be derived from the internal temperature of the device electronics. In another embodiment, autonomous devices or the harvesters themselves explicitly measure the environment temperature. In another embodiment, the devices or harvesters already provide a processed temperature difference value over digital communication.

In summary, the prediction of used and available energy is interweaved with today's existing activities along the life-cycle of a plant. Its purpose is to have at all times a rather precise estimate of the energy behavior of active plant components to increase the availability of the automation functions of the DCS and to be able to do this in a traceable and resource-efficient manner.

In Fig. 2 a further embodiment of the invention is disclosed, wherein a plant automation system is provided comprising a predictive energy consumption control system applied to the system and in particular to its network, devices and energy sources, interfering with system / platform level to form an energy aware network, with the device instance level to form energy aware devices and intelligent energy sources by means of a precisely prediction of the energetic behavior of a device in a given process plant or process plant environment and/or harvesting and/or operational control actions. Accordingly, on the device type level a set of use-case oriented, device-specific energy models and/or energy data structures are determined and/or provided, including information on the effect of environmental conditions, a fieldbus-specific (but device-generic) communication model is determined and/or provided, including information about network management overhead and/or information on the usage of the existing or planned devices for any of the use-cases given in the energy data structure or model.

Using and/or processing and/or applying these models and information about the instances, at least one data processing unit is provided and equipped to analytically predict and determine the energy consumption of each specific device instance in the respective network and/or plant.

Furthermore a set of energy source profiles is determined and/or provided including at least one of information on the effect of environmental conditions, information on the placement and environmental conditions of each energy source instance.

By using and /or processing the energy source models and instance information, the at least one data processing unit determines and/or calculates the expected available energy as a function of time and/or process conditions.

Required and available energy values are both and/or together used inside network planning and monitoring components of the DCS to predict maintenance schedules, provide input to the Network Manager in the form of energy limits, in particular optionally adjusted by maintenance requirements, and monitor the energy condition of the network during operation.

To determine the harvesting potential during offline engineering, the process engineering data or construction plans are analyzed.

Particularly for temperature harvesting, min/max ranges of IO points are considered, temperature set-points are considered, estimated environment temperatures are taken into account. This allows an estimation of the expected temperature difference available for harvesting.

According to vibration or vibrational harvesting, the type and size of rotating equipment and speed or torque set-points are considered and/or taken into account and/or processed.

Particularly for solar harvesting, time of the year and/or season and time of day are considered and/or processed along with the location of the harvester, for example if the harvester is positioned or arranged indoor or outdoor.

For all types of harvesting, the environment temperature is considered and/or processed as it typically impacts the energy behavior of any kind of electronics.

Any such prediction of harvester and/or device energy consumption behavior allows a more exact determination and/or selection of the right type of energy source for the given usage of its device and the process environment in which it will be used. In some cases, dedicated wired power supply, for example for repeaters, may be warranted. Temperature harvesters have different efficiencies for various temperature differences and absolute environmental temperatures. Vibration harvesters operate very badly outside of a specific resonance frequency. It is not a solution to compensate this by"just buying the most expensive harvester" and/or just buying the best perperforming or equipped harvester.

To verify and monitor harvesting potential at runtime and in particular before simply measuring current energy output of a harvester, the actual primary or secondary, etc. values of the field devices are used and/or processed.

In particular concerning temperature harvesting, the primary value may be compared to the environment value, which typically can be derived from the internal temperature of the device electronics. In another embodiment, autonomous devices or the harvesters themselves explicitly measure the environment temperature. In another embodiment, the devices or harvesters already provide a processed temperature difference value over digital communication.

Accordingly a predictive energy consumption method for a distributed control system is provided to be executed on a corresponding system, comprising at least one data processing unit, wherein a collecting device is provided which gathers harvesting relevant data and information for each existing and/or planned device in each network, whereas the data may comprise at least one of
■ device type corresponding description,
■ burst configuration for each device instance (cyclic data),
■ execution strategy for each asset monitor instance (acyclic data),
■ command sequences from asset monitors of each device type,
■ length of each of the gathered commands,
■ graphs implementing the end-to-end communication between devices and gateways,
■ planned/expected transmit signal strength,
■ network management overhead (e.g. advertising tasks), and
■ environmental conditions (e.g. temperature), which may be given as a function of time.

Furthermore, the data processing unit comprises profiling means generating usage profiles according to the gathered information and data for each device in each network, wherein said profiles relate to and contain information which relates
■ the amount of bytes received by each device per given time unit,
■ the amount of bytes sent by each device per given time unit, and
■ the amount of device functions (e.g. measurement) executed per given time function

Moreover, using and processing the energy profile given for each of the used device types and the gathered instance information, the required amount of energy per given time unit is determined and calculated for each device instance.

For each existing or planned available energy source at least one of the
■ source type and corresponding description,
■ the environmental conditions (e.g. temperature) which may be given as a function of time is gathered and/or the energy source for each device instance is identified where such a mapping exists.

Furthermore for each device instance at least one of the
■ desired communication latency of the burst data connection,
■ desired reliability of the burst data connection,
■ desired availability of the burst data connection may be determined, wherein
for each energy source instance the desired maintenance effort and schedule may be determined and/or operational actions are proposed and/or provided.

Overall, the method allows with low effort to engineer a communication infrastructure that does not only fulfill the application needs (bandwidth, cycle time, etc.), but also exhibits a controlled and known energy use and thus ensures and proves system reliability from an energy perspective (which is not state of the art).

In summary, the prediction of used and available energy is interweaved with today's existing activities along the life-cycle of a plant. Its purpose is to have at all times a rather precise estimation of the energy behavior of active plant components to increase the availability of the automation functions of the DCS and to be able to do this in a traceable and resource-efficient manner.

## Claims

1. Predictive energy consumption control system for an improved energy management of autonomous devices in process automation system, comprising at least one data processing unit equipped to generate and/or apply at least one use-case oriented energy consumption model for autonomous devices, in particular autonomous transmitters AT, wherein at least one of energy during sleep-mode, energy during any activity, energy to transmit data, in particular to transmit a single byte, energy to receive data, in particular to receive a single byte ,and energy to measure a process value and/or to perform an actuation task is predictively determined and processed and/or coded into the devices firmware providing an improved energy management and control functionality for each device.

2. System according to claim 1, **characterized in that** the energy behavior or any given device depending on its own design, its use in the actual automation process, the process environment, like for example environment temperature, amount of vibration, duration of daytime is predictively determined.

3. System according to claim 2, **characterized in that** the predicted energy behavior is used to improve established life-cycle activities of offline automation engineering, including device and communication engineering, commissioning, plant operation including device/fieldbus diagnostics, monitoring, and fault prediction and/or wherein the plant engineering, commissioning and operation is being improved and optimized according to the predicted and/or measured energy consumption of the applied devices..

4. System according to one of the preceding claims **characterized in that** the energy behavior of one or more autonomous and/or individual devices, which may generate and/or supply or use and/or consume energy, in a process automation system is determined, in particular individually, and/or wherein the amount of energy available from energy sources, like batteries, harvesters, 4-20mA loops, and the like is determined.

5. System according to one of the preceding claims **characterized in that** to each energy source a profile is assigned connecting input parameters to an expected energy output, wherein said input parameters are at least one of environmental conditions such as environment temperature, amount of vibration, duration of daytime and the like the resulting physical quantities, in particular temperature difference, available vibration or light and the like.

6. System according to one of the preceding claims, **characterized in that** during offline engineering constraints on available energy are estimated along with the required energy from the devices, which allows already checking if an automation design is feasible from an energy perspective.

7. System according to one of the preceding claims, **characterized in that** the energy consumption may be constrained strategically, for example to enforce a certain battery life-time or generally reduce the strain on an energy source.

8. System according to one of the preceding claims, **characterized in that** constraints on energy use are also made available to communication engineering in order to place gateways or additional wireless repeaters in opportune places to relieve process-relevant devices from energy-intensive communication tasks such as functioning as repeaters and/or constraints on energy use are also made available to communication engineering as input to the calculation or determination of communication schedules on top of the selected devices, repeaters, and gateways in their locations.

9. System according to one of the preceding claims **characterized in that** to further increase the precision of the estimated energy consumption, the expected environment temperature is taken into account, as it typically impacts the energy behavior of any kind of electronics.

10. System according to one of the preceding claims, **characterized in that** the device has an internal copy of its own energy consumption model and when first joining a wireless network, in particular a wirelessHART network, the respective network manager downloads the transmission schedule and burst configurations, that is in which intervals the device is expected to measure process data or perform actuation and also describing for which neighbours the autonomous devices and/or transmitters must forward data to the gateway of the network enabling the device to predict its own future energy consumption by combining the energy model and the actual usage according to the schedule and making the results of this predication available for retrieval by the automation system.

11. Predictive energy consumption control method for an improved energy management of autonomous devices in process automation system, generating and/or applying at least one use-case oriented energy consumption model for autonomous devices, in particular autonomous transmitters AT, wherein at least one of energy during sleep-mode, energy during any activity, energy to transmit data, in particular a single byte, energy to receive data, in particular a single byte, and energy to measure a process value, in particular a pressure value, is predictively determined and processed and/or coded into the devices firmware providing an improved energy management and control functionality for each device.

12. Method according to claim 11, **characterized in that** the energy behavior of any given device depending on its own design, its use in the actual automation process, the process environment, like for example environment temperature, amount of vibration, duration of daytime is predictively determined.

13. Method according to claim 12, **characterized in that** the predicted energy behavior is used to improve the established life-cycle activities of offline automation engineering, including device and communication engineering, commissioning, plant operation including device/fieldbus diagnostics, monitoring, and fault prediction.

14. Method according to one of the preceding claims 11 to 13, **characterized in that** the energy behavior of one or more autonomous and/or individual devices, which may generate and/or supply or use and/or consume energy, in a process automation system is determined, in particular individually, and/or wherein the amount of energy available from energy sources, like batteries, harvesters, 4-20mA loops, and the like is determined.

15. Method according to one of the preceding claims 11 to 14, **characterized in that** to each energy source a profile is assigned connecting input parameters to an expected energy output, wherein said input parameters are at least one of environmental conditions such as environment temperature, amount of vibration, duration of daytime and the like the resulting physical quantities, in particular temperature difference, available vibration or light and the like.

16. Method according to one of the preceding claims 11 to 15, **characterized in that** during offline engineering constraints on available energy are estimated along with the required energy from the devices, which allows already checking if an automation design is feasible from an energy perspective.

17. Method according to one of the preceding claims 11 to 16, **characterized in that** constraints on energy use are also made available to communication engineering in order to place gateways or additional wireless repeaters in opportune places to relieve process-relevant devices from energy-intensive communication tasks and/or constraints on energy use are also made available to communication engineering as input to the calculation or determination of communication schedules on top of the selected devices, repeaters, and gateways in their locations.

18. Method according to one of the preceding claims 11 to 17, **characterized in that** to further increase the precision of the estimated energy consumption, the expected environment temperature is taken into account, as it typically impacts the energy behavior of any kind of electronics.

19. Method according to one of the claims 11 to 18, **characterized in that** an internal copy of its own energy consumption model is provided in the respective device and when first joining a wireless network, in particular a wirelessHART network, the transmission schedule and burst configurations, that is in which intervals the device is expected to measure process data or perform actuation and also describing for which neighbours the autonomous devices and/or transmitters must forward data to the gateway of the network are downloaded, in particular by the respective network manager, wherein the future energy consumption of the device is predicted by the device itself by combining the energy model and the actual usage according to the schedule and/or wherein the results of this predication are made available for retrieval by the automation system.

20. Method according to one of the preceding claims 11 to 19, **characterized in that** the information on environmental conditions for a particular device are estimated by extracting information for the IO point to which the device is connected from a process design model and/or a process design data structure, in particular a piping and instrumentation diagram.

21. Method according to one of the preceding claims 11 to 20, **characterized in that** the expected and/or estimated energy or energy consumption is determined and/or calculated according to or based on the temperature difference extracted from a process design data structure, in particular extracted from the P&ID or piping and instrumentation diagram, and/or wherein environment conditions, in particular expected environment conditions, like temperature and/or flow and/or vibrations and the like are taken into account and/or are processed to determine the energy behavior of the respective device and/or any kind of electronics.

22. Method according to one of the preceding claims 11 to 21, **characterized in that** the exact energy consumption for the current usage or application of an autonomous device instance is determined and/or calculated.
